**Europäisches Patentamt**

**European Patent Office**

**Office européen des brevets**

(19)

(11) Publication number : **0 420 315 B1**

(12) # EUROPEAN PATENT SPECIFICATION

(45) Date of publication of patent specification :
**03.11.93 Bulletin 93/44**

(51) Int. Cl.⁵ : **A23D 7/00**

(21) Application number : **90202416.5**

(22) Date of filing : **11.09.90**

(54) **Spread.**

The file contains technical information
submitted after the application was filed and
not included in this specification

(30) Priority : **29.09.89 GB 8921997**
**24.10.89 EP 89202681**
**19.02.90 EP 90200386**
**04.05.90 EP 90201123**

(43) Date of publication of application :
**03.04.91 Bulletin 91/14**

(45) Publication of the grant of the patent :
**03.11.93 Bulletin 93/44**

(84) Designated Contracting States :
**AT BE CH DE DK ES FR GB GR IT LI NL SE**

(56) References cited :
**EP-A- 0 233 565**
**EP-A- 0 279 499**
**EP-A- 0 327 225**
**EP-A- 0 327 288**
**GB-A- 2 205 849**

(73) Proprietor : **UNILEVER N.V.**
**Weena 455**
**NL-3013 AL Rotterdam (NL)**
(84) **BE CH DE DK ES FR GR IT LI NL SE AT**
Proprietor : **UNILEVER PLC**
**Unilever House Blackfriars P.O. Box 68**
**London EC4P 4BQ (GB)**
(84) **GB**

(72) Inventor : **Norton, Ian Timothy**
**Unilever Research Colworth Lab., Colworth**
**House**
**Sharnbrook, Bedford MK44 1LQ (GB)**
Inventor : **Kelly, Thomas Reid**
**Unilever Research Colworth Lab., Colworth**
**House**
**Sharnbrook, Bedford MK44 1LQ (GB)**
Inventor : **Underdown, Jeffrey**
**Krupunder Grund 51 A**
**D-2000 Hamburg 83 (DE)**

(74) Representative : **Mulder, Cornelis Willem**
**Reinier, Dr. et al**
**UNILEVER N.V. Patent Division P.O. Box 137**
**NL-3130 AC Vlaardingen (NL)**

Note : Within nine months from the publication of the mention of the grant of the European patent, any
person may give notice to the European Patent Office of opposition to the European patent granted.
Notice of opposition shall be filed in a written reasoned statement. It shall not be deemed to have been
filed until the opposition fee has been paid (Art. 99(1) European patent convention).

## Description

The present invention is concerned with a spread of very low fat content. In particular the present invention relates to a spread containing from 15 to 30 wt.% of a continuous fat phase.

In GB 2 205 049 a process is described for the preparation of fat-continuous spreads having a fat content of at least 30 wt.%. For stabilizing the water phase use is made of a combination of starch and gelatin.

We have found that a fat-continuous spread of very low fat content, having an exceptional good quality as regards oral response, spreadability and stability can be obtained if said spread contains, in combination, gelatin and a native intact starch, Accordingly the present invention is directed to a spread comprising from 17-28 wt.% of a continuous fat phase and 83-72 wt.% of an aqueous phase and further containing 1.2 to 6.0 wt.% gelatin and 1.0 to 6.0 wt.% of native intact starch,

The exceptionally good oral response of the present spread can partly be explained from the fact that the product displays pronounced in-mouth thinning due to amylase activity.

The spreads of the invention offer the advantage, that the starches are included at only relatively low concentration levels, offering the advantage that, unlike hydrolyzed starch, off-flavour problems are normally not encountered.

A further advantage of a spread of the formulation according to the invention is that such a spread can easily be manufactured as it does not require special equipment and moreover since the product quality is not easily affected by fluctuations in processing conditions.

In a preferred embodiment of the present invention the spread comprises 17-28 wt.% of a continuous fat phase and 83-72 wt.% of an aqueous phase. In spreads of such a low fat content the product properties are highly dependent on the composition of the aqueous phase. In particular the presence of gelling agents, thickening agents and surface active components appears to have a crucial effect on the emulsion stability, in-mouth break down characteristics and spreadability of very low fat spreads. The combined utilization of gelatin and the native intact starche in accordance with the present invention, enables the preparation of very low fat spreads exhibiting excellent stability under storage conditions, breaking down easily in the mouth and showing no syneresis on spreading. Preferably the present spread contains at least 1.5 wt.% gelatin, and according to another preferred embodiment less than 5.0 wt.% gelatin. The starch content of the present spread preferably exceeds 1.5 wt.%

Examples of native intact starches we have found very suitable are Remyline ™ and Remyrice ™ starch.

In another preferred embodiment of the present invention the fat phase of the spread contains less than 7 % saturated fatty acid residues by weight of the product. The consumption of relatively large amounts of saturated fatty acid residues is known to increase the cholesterol content of the blood and may thus promote the risk of heart and vascular diseases. It is thus advantageous if a product contains a reduced amount of saturated fatty acid residues. The spread according to this preferred embodiment of the invention combines a very good product quality with an extremely low content of saturated fatty acid residues. Although spreads having a lower saturated fatty acid residues content have been described in the art, these prior art products have in common that they contain essentially no fat and are inferior to spreads containing substantial amounts of fat. In a very preferred embodiment of the invention the fat phase comprises from 3.5% - 6.0% of saturated fatty acid residues by weight of the product.

In addition to a low content of saturated fatty acid residues, the present spread preferably contains a high level of polyunsaturated fatty acid residues. Preferably the present spread contains polyunsaturated and saturated fatty acid residues in a weight ratio of at least 1.5, more preferably of at least 2.0.

The present invention encompasses spreads containing a continuous fat phase and an aqueous phase which may be either continuous or discontinuous. Preferably the present spread is a water-in-oil dispersion, i.e. preferably the aqueous phase of the present spread is composed of dispersed water droplets. It is to be understood that the term water-in-oil dispersion also encompasses dispersions of the duplex type wherein the dispersed aqueous phase contains a dispersed fat phase. Fat-continuous spreads containing a dispersed aqueous phase are characterized by a very low conductivity.

In this specification, unless otherwise indicated, the term 'fat' refers to edible fatty substances in a general sense, including natural or synthesized fats and oils consisting essentially of triglycerides such as, for example, soybean oil, sunflower oil, palm oil, coconut oil, fish oil, lard and tallow, which may have been partially or completely hydrogenated, fractionated, interesterified or modified otherwise, as well as non-toxic fatty materials having properties similar to triglycerides, which materials may be indigestible, such as for example waxes, e.g. jojoba oil and hydrogenated jojoba oil, and polyol fatty acid polyesters. Throughout this application the terms fat and oil are deemed synonymous and used interchangeably.

The water droplet size of the dispersed aqueous phase is of influence on the flavour release, stability and appearance of the present spread. Products of a very good quality can be obtained if the water droplets have a number weighted mean diameter of 3-30 $\mu$m, more preferably of 4-15 $\mu$m. Whenever referred to in this document, the number weighted mean diameter is determined by means of NMR [see J. Colloid and Interface Science (1972) 10, 206 and (1983) 93, 521] using a log-normal distribution as is commonly employed for particle size analysis.

With regard to the product quality, in particular the oral response, the gelatin content employed in the present spread appears to be critical. According to a very preferred embodiment of the present invention the spread comprises 2.0 to 4.5 wt.% gelatin. Furthermore the present spread preferably contains 2.0 to 5.0 wt.% of starch.

The aqueous phase, in addition to gelatin and starch, may suitably include other ingredients such as thickening agents, gelling agents, salt and flavour ingredients. Suitable thickening agents are, for instance, gums like guar gum, locust bean gum and xanthan gum. Examples of gelling agents that may suitably be incorporated in the aqueous phase are carrageenan, calcium caseinate, pectin and alginate.

The aqueous phase of the spread according to the present invention preferably has been acidified to a pH of less than 6.0, more preferably to a pH in the range of 4.8 to 5.5. A pH within this range guarantees an acceptable microbiological stability in combination with a good taste. The aqueous phase composition may have been prepared from normal tap water, but also from aqueous compositions of dairy origin such as for instance skim milk. In case skim milk is used in the preparation of the aqueous phase composition it can be advantageous from a microbiological point of view to use reconstituted skim milk.

The inclusion into the present spread of protein other than gelatin, in particular milk protein, is advantageous as it improves the taste of the spread and promotes in-mouth inversion. In-mouth inversion is accompanied by the release of flavour compounds dissolved in the aqueous phase. Preferably the present spread contains from 0.1 to 5.0 wt.% of protein other than gelatin.

According to yet another preferred embodiment the fat phase of the present spread has an $N_{10}$ value in the range of 10-25 an $N_{20}$ in the range of 5-15 and an $N_{35}$ of less than 3. Spreads according to the invention comprising such a fat phase are found to be relatively quick melting in the mouth and are easily spreadable even when taken directly from the refrigerator. The N-value at a certain temperature may be determined by means of NMR, using the method described in "Fette, Seifen, Anstrichmittel", 80 (1978), 180-186.

The fat phase of the present spread may comprise several ingredients such as colouring agents, flavourings, vitamins and emulsifiers. Examples of emulsifiers which may suitably be incorporated in the fat phase of the present product are: monoglycerides, diglycerides and phosphatides.

The spread according to the present invention may suitably be prepared by means of processing equipment well known in the art of spread manufacture. Examples of apparatus that can be used in the manufacture of the present spread are scraped surface heat exchangers (Votators ™), crystallizers (C-units), resting tubes, cavity transfer mixers, static mixers, resting tubes, pressure valves and static heat exchangers such as cooling coils.

The present spread may be prepared by a process including the inversion of a water-continuous emulsion to a fat-continuous dispersion as well as by a process in which a fat-continuous emulsion is formed upon admixing the aqueous phase composition with the fat blend prior to passing the emulsion so formed through the production line.

The present invention is further illustrated by means of the following example:

Example 1

A spread of very low fat content (25 wt.%) was prepared of the following ingredients (in % by weight of total product):

| Fat phase | wt.% |
|---|---|
| Fat blend containing 50% soybean oil, 11% coconut oil, 19% soybean oil hardened to 41°C and 20% of soybean oil hardened to 33°C | 24.3 |
| Dimodan O T$^M$ (monoglyceride) | 0.5 |
| Lecithin | 0.2 |
| Beta carotene and flavour | |

| Aqueous phase | |
|---|---|
| Remyline AC $^{TM}$ (Rice starch) | 3.0 |
| Gelatin 250 Bloom | 3.5 |
| Salt | 1.5 |
| Skim milk powder | 1.0 |
| Potassium sorbate | 0.12 |
| Citric acid to a pH of 5.8 | |
| Water to 100% | |

The spread was prepared by first separately preparing the aqueous phase composition and fat phase composition and then feeding the two compositions in separate streams (both having a temperature of about 50°C) via a proportioning pump to the production line. In the proportioning pump the fat blend and aqueous phase composition were combined in a weight ratio of 25:75. From the proportioning pump the emulsion was fed, at a throughput of 3.2 tons/hr, through three scraped surface heat exchangers (Schroeder ™) followed by a C-unit and yet two other scraped surface heat exchangers, after which the product was filled into tubs.

The five scraped surface heat exchangers had a diameter of 178 mm. The exit temperature of the emulsion from the third heat exchanger was 10°C. After the C-unit the emulsion had reached a temperature of 20°C. The filling temperature was 14°C. The C-unit was operated at 925 rpm, the scraped surface heat exchangers at 350 rpm.

The pH of the product was found to be 5.8. The spread was evaluated by a professional test panel who found the product to have a smooth appearance which was very similar to spreads of substantially higher fat content. Furthermore the product was found to break down easily in the mouth. The spread did not exhibit syneresis upon spreading and was easy spreadable even when taken directly form a refrigerator.

The incorporation of an additional C-unit (100 rpm) after the last heat exchanger was found to produce a spread of good quality.

## Claims

1. Spread comprising from 17-28 wt.% of a continuous fat phase and 83-72 wt.% of an aqueous phase which contains 1.2 to 6.0 wt.% gelatin and 1.0 to 6.0 wt.% of native intact starch,

2. Spread according to claim 1, wherein the spread contains at least 1.5 wt.% gelatin.

3. Spread according to any one of claims 1-2, wherein the spread contains at least 1.5 wt.% starch.

4. Spread according to any one of claims 1-3, wherein the fat phase comprises less than 7% saturated fatty acid residues by weight of the product.

5. Spread according to any one of claim 1-4, wherein the spread contains from 0.1 to 5.0 wt.% protein other than gelatin.

6. Spread according to any one of claims 1-5, wherein the aqueous phase is composed of dispersed water droplets.

7. Spread according to claim 6, wherein the water droplets have a number weighted mean diameter of 3-30 $\mu$m.

8. Spread according to any one of claim 1-7, wherein the spread comprises 2.0 to 4.5 wt.% gelatin.

9. Spread according to any one of claims 1-8, wherein the fat phase has an $N_{10}$ value in the range of 10-25, an $N_{20}$ in the range of 5-15 and an $N_{35}$ of less than 3.


**Patentansprüche**

1. Brotaufstrich, der 17 bis 28% einer kontinuierlichen Fettphase und 83 bis 72 Gew.-% einer Wasserphase umfaßt und der 1,2 bis 6,0 Gew.-% Gelatine und 1,0 bis 6,0 Gew.-% native unversehrte Stärke enthält.

2. Brotaufstrich nach Anspruch 1, worin der Brotaufstrich mindestens 1,5 Gew.-% Gelatine enthält.

3. Brotaufstrich nach einem der Ansprüche 1 bis 2, worin der Brotaufstrich mindestens 1,5 Gew.-% Stärke enthält.

4. Brotaufstrich nach einem der Ansprüche 1 bis 3, worin die Fettphase weniger als 7% gesättigte Fettsäurereste, bezogen auf das Gewicht des Produktes, enthält.

5. Brotaufstrich nach einem der Ansprüche 1 bis 4, worin der Brotaufstrich 0,1 bis 5,0 Gew.-% eines anderen Proteins als Gelatine enthält.

6. Brotaufstrich nach einem der Ansprüche 1 bis 5, worin die Wasserphase aus dispergierten Wassertröpfchen zusammengesetzt ist.

7. Brotaufstrich nach Anspruch 6, worin die Wassertröpfchen einen zahlenmäßig gewichteten mittleren Durchmesser von 3 bis 30 $\mu$m haben.

8. Brotaufstrich nach einem der Ansprüche 1 bis 7, worin der Brotaufstrich 2,0 bis 4,5 Gew.-% Gelatine umfaßt.

9. Brotaufstrich nach einem der Ansprüche 1 bis 8, worin die Fettphase einen $N_{10}$-Wert im Bereich von 10 bis 25, einen $N_{20}$-Wert im Bereich von 5 bis 15 und einen $N_{35}$-Wert von weniger als 3 hat.


**Revendications**

1. Produit à tartiner qui comprend de 17 à 28% en poids d'une phase grasse continue et de 83 à 72% en poids d'une phase aqueuse et qui contient en outre 1,2 à 6,0% en poids de gélatine et de 1,0 à 6,0% en poids d'un amidon intact naturel.

2. Produit à tartiner selon la revendication 1, dans lequel le produit contient au moins 1,5% en poids de gélatine.

3. Produit à tartiner selon la revendication 1 ou 2, qui contient au moins 1,5% en poids d'amidon.

4. Produit à tartiner selon l'une quelconque des revendications 1 à 3, dans lequel la phase grasse comprend moins de 7% de restes d'acides gras saturés en poids du produit.

5. Produit à tartiner selon l'une quelconque des revendications 1 à 4, qui contient de 0,1 à 5,0% en poids de protéines autres que la gélatine.

6. Produit à tartiner selon l'une quelconque des revendications 1 à 5, dans lequel la phase aqueuse est composée de gouttelettes d'eau dispersées.

7. Produit à tartiner selon la revendication 6, dans lequel les gouttelettes d'eau ont un diamètre moyen pondéré en nombre de 3 à 30 $\mu$m.

8. Produit à tartiner selon l'une quelconque des revendications 1 à 7, qui comprend de 2,0 à 4,5% en poids de gélatine.

9. Produit à tartiner selon l'une quelconque des revendications 1 à 8, dans lequel la phase grasse présente une valeur $N_{10}$ comprise entre 10 et 25, une valeur $N_{20}$ comprise entre 5 et 15 et une valeur $N_{35}$ de moins de 3.